# FASCICULE DE BREVET EUROPEEN

(11) **EP 1 040 669 B1**
(45) Date de publication et mention de la délivrance du brevet: **29.08.2001**
(21) Numéro de dépôt: 98959976.6
(22) Date de dépôt: 14.12.1998
(51) Int. Cl.: H04N 17/00

(54) **PROCEDE DE PILOTAGE D'UN EQUIPEMENT DE METROLOGIE EN TELEVISION NUMERIQUE**
VERFAHREN ZUM STEUERN EINER MESSANLAGE FÜR DIGITALES FERNSEHEN
METHOD FOR CONTROLLING A DIGITAL TELEVISION METROLOGY EQUIPMENT

(30) Priorité: 17.12.1997 FR 9716002
(43) Date de publication de la demande: 04.10.2000
(73) Titulaire: TELEDIFFUSION DE FRANCE, 75015 Paris (FR)
(72) Inventeur: BA NA, Jamal, F-54000 Nancy (FR); BELLAMY, Hervé, F-57070 Metz (FR); RICHARD, Michel, F-57420 Cheminot (FR)
(74) Mandataire: Jacquard, Philippe Jean-Luc
(86) Numéro de dépôt international: FR9802716
(87) Numéro de publication internationale: WO9931890

(56) Documents cités:
- EP-A- 0 624 983
- EP-A- 0 786 883
- WO-A-95/33338
- US-A- 5 473 385
- US-A- 5 600 632
- US-A- 5 699 392
- SCHULMAN M. A.: "END-TO-END PERFORMANCE MEASUREMENT FOR INTERACTIVE MULTIMEDIA TELEVISION" PROCEEDINGS OF THE INTERNATIONAL TEST CONFERENCE (ITC) , WASHINGTON , OCTOBER 21-25 , 1995, pages 979-985, XP000552905

## Description

La présente invention a pour objet un procédé de pilotage d'un équipement de métrologie de la qualité des signaux de télévision numérique .

Les équipements de mesure de la qualité, ou plus précisément de l'évaluation de la dégradation éventuelle de la qualité, qui sont actuellement connus, sont conçus pour effectuer des mesures ponctuelles, mais ils ne permettent pas aisément d'effectuer des mesures en des points différents de réseau d'émission, par exemple à l'entrée du réseau et en différents noeuds du réseau, tout en assurant que ces mesures sont effectuées sur les mêmes séquences d'images.

Le document SCHULMAN M. A.: "END-TO-END PERFORMANCE MEASUREMENT FOR INTERACTIVE MULTIMEDIA TELEVISION" PROCEEDINGS OF THE INTERNATIONAL TEST CONFERENCE (ITC) , WASHINGTON , OCTOBER 21-25, 1995, pages 979-985, XP000552905, décrit un système d'analyse de réseau pour la télévision numérique dans lequel le passage d'événements, c.à.d. de paquets de données, est analysé en différents points du réseau. Les événements peuvent représenter des données d'image vidéo ou bien des signaux de commande tels que "pause", "avance rapide", etc. Les informations analysées concernent la taille des paquets de données ainsi que le moment de leur passage en un point donné. Ces moments sont déterminés par rapport à une trace temporelle (time stamp) obtenue à chaque point d'analyse par une horloge locale. Les horloges à chaque point d'analyse sont synchronisées entre elles. Les résultats des analyses sont finalement téléchargés sur une base de donnée centrale.

Le document US - A - 5 600 632 décrit un système similaire à celui du document précédent, dans lequel plusieurs analyseurs sont répartis sur le réseau et analysent les traces temporelles de paquets de données transmis. Pour ce faire, chaque analyseur comporte une horloge synchronisée avec celles des autres analyseurs.

La présente invention a pour objet un procédé de pilotage d'un équipement de métrologie, qui permet d'apporter une solution à ce problème.

L'idée de base de l'invention est de générer un signal d'horloge numérique qui est échantillonné à chaque signal de synchronisation vidéo, pour permettre de donner à l'équipement de mesure une référence pour le début des mesures à effectuer, ainsi qu'une information de datation permettant de marquer la ou les séquences d'images qui feront l'objet de mesures.

L'invention concerne ainsi un procédé de pilotage d'un équipement de métrologie de la qualité de signaux de télévision numérique comportant un flux de données organisées selon des trames, caractérisé en ce qu'il comporte les étapes suivantes :
a) sélectionner dans le flux de données un signal temporel de référence
b) générer à partir du signal temporel de référence un signal d'horloge numérique multibits dont la phase est asservie à partir dudit signal temporel de référence et dont le compte est déduit de manière univoque de celui d'une base temporelle générée lors de l'encodage initial des signaux de télévision numérique
c) transmettre au moins des bits significatifs du signal d'horloge numérique à l'équipement de mesure en synchronisme avec un signal analogique de synchronisation de trame vidéo, décodé à partir du flux de données pour générer un signal de déclenchement des mesures. Les bits conservés sont au moins ceux qui sont significatifs pour la nature des mesures effectuées.

L'étape a comporte avantageusement les sous-étapes suivantes :
a₁) sélectionner les trames correspondant à des données vidéo spécifiques associées à un programme
a₂) sélectionner dans lesdites trames ledit signal temporel de référence.

Les signaux de télévision numérique sont par exemple selon le standard MPEG-2 et lors de l'étape a₁, la sélection des trames s'effectue à partir du champ PID.

Les données vidéo spécifiques sont de préférence celles pour lesquelles sont effectuées des mesures de qualité audio et/ou vidéo. Dans ce cas, le procédé peut comporter une étape de décodage des données vidéo spécifiques à partir de trames sélectionnées à partir du champ PID.

La sélection du signal temporel de référence peut s'effectuer en testant un drapeau de présence du signal temporel de référence dans chaque trame considérée.

Pour les signaux de télévision numérique selon le standard MPEG-2, le signal temporel de référence peut être le signal PCR ou le signal SCR. Lors de l'étape b, ledit signal d'horloge numérique présente avantageusement une fréquence de k x 27MHz, k étant un nombre entier ou fractionnaire non nul.

L'invention concerne également un équipement de métrologie de la qualité de signaux de télévision numérique comportant un flux de données organisées selon des trames, caractérisé en ce qu'il comporte :
- un dispositif d'identification recevant à une entrée le flux de données et produisant en sortie un signal temporel de référence sélectionné dans le flux de données
- un générateur d'horloge dont la phase est asservie à partir dudit signal temporel de référence et produisant en sortie un signal d'horloge numérique multibits cadencé à une fréquence donnée et dont le compte est déduit de manière univoque d'une base temporelle générée lors de l'encodage initial des signaux vidéo numériques
- un dispositif d'échantillonnage recevant à une première entrée ledit signal d'horloge numérique et à une deuxième entrée un signal analogique de synchronisation de trame vidéo présent en sortie d'un décodeur du flux de données, et produisant en sortie à chaque occurrence dudit signal analogique de synchronisation de trame video un signal représentant la valeur actualisée au moins de bits significatifs du signal d'horloge numérique.
- un dispositif de mesure recevant en entrée ledit signal de valeur actualisée et générant en conséquence un signal de déclenchement des mesures.

D'autres caractéristiques et avantages de l'invention apparaitront mieux à la lecture de la description qui va suivre, donnée à titre d'exemple non limitatif, en liaison avec les dessins ci-annexés, dans lesquels :
- la figure 1 est un diagramme fonctionnel d'un dispositif mettant en oeuvre le procédé selon l'invention,
- la figure 2 est un schéma fonctionnel illustrant le fonctionnement du module TIC de la figure 1,
- la figure 3 représente un mode de réalisation du dispositif de la figure 1,
- la figure 4 illustre la boucle à verrouillage de phase du module SSTC,
- et la figure 5 est un diagramme temporel illustrant la synchronisation vidéo.

La norme MPEG2 [ISO/IEC 13818-1] expose la façon de combiner un ou plusieurs flux élémentaires ("elementary stream") de vidéo, d'audio et de données, en un flux adapté à la transmission ou au stockage. Cette norme fournit les informations suffisantes et nécessaires pour synchroniser la présentation en sortie d'un décodeur des signaux vidéo et audio, et pour s'assurer que les mémoires tampons ou les buffeurs du décodeur ne se vident pas ou ne se saturent pas. Ces informations sont en fait des marques temporelles ("time-stamps") concernant le décodage et la présentation des signaux vidéo et audio, et des marques temporelles concernant la fourniture du flux binaire lui-même.

Le modèle temporel décrit dans la norme est un modèle assurant un délai constant. Ce dernier est le retard entre l'entrée d'un signal dans l'encodeur et sa sortie du décodeur. Il est dû à l'encodage, aux "buffeurs" du décodeur ainsi qu'à la présentation en sortie du décodeur. Ainsi, chaque image et chaque échantillon audio est présenté une et une seule fois. De cette manière l'intervalle séparant deux images reste fixe. Par ailleurs, la fréquence d'échantillonnage du signal audio est la même à l'entrée de l'encodeur et à la sortie du décodeur.

La fonction des marques temporelles est d'assurer que le délai est constant et que les signaux vidéo et audio en sortie du décodeur sont synchronisés. Elles représentent en fait un compteur s'incrémentant à chaque coup d'une horloge constituant la base temporelle ("System Time Clock" ou STC à 27MHz dans la norme).

Le délai constant et la synchronisation des signaux vidéo et audio en sortie du décodeur peuvent être obtenus lorsque les encodeurs sauvegardent les marques temporelles. C'est le cas quant celles-ci sont transmises au décodeur avec les signaux associés, et que le décodeur les utilise pour réguler temporellement la présentation des signaux à sa sortie.

Les principales marques temporelles sont :
- SCR ("System Clock Reference") pour le flux de programme ("Program Stream") et PCR ("Program Clock Reference") pour le flux de transport ("Transport Stream").
   Ces marques encodent en fait la base temporelle utilisée pour les DTS et les PTS vidéo et audio (définis ci-dessous) d'un même programme.
   La base temporelle STC est un compteur de 42 bits représentant une horloge cadencée à 27 Mhz, et les marques temporelles sont codées sur 33+9 bits.
   Le SCR ou le PCR servent à régénérer dans le décodeur la même base temporelle STC que lors de l'encodage, pour assurer un délai constant.
- DTS ("Decoding Time-Stamp") : cette marque temporelle indique l'instant de présentation en entrée du décodeur d'un bloc de signal codé ("Access Unit" ou AU). La base temporelle est l'horloge précédente divisée par 300 (ce qui donne une horloge cadencée à 90 Khz), et cette marque temporelle est codée sur 33 bits.
- PTS ("Presentation Time-Stamp") : cette marque temporelle indique l'instant de présentation en sortie du décodeur d'un bloc de signal décodé ("Présentation Unit"). La base temporelle est la même horloge que pour les DTS (horloge cadencée à 90 Khz), et cette marque temporelle est codée sur 33 bits. Le PTS doit être présent dans chaque PES au moins toutes les 0,7 seconde et il se situe dans l'en-tête de paquet ("packet header") PES.

Il faut bien noter que les signaux PTS et les DTS représentent des marques temporelles relatives à la base temporelle STC. Elles ne correspondent pas à une heure absolue (c'est-à-dire qu'elles n'indiquent ni l'heure de l'encodage, ni l'heure du décodage).

La présente invention se propose d'exploiter les données temporelles du système MPEG 2, pour piloter les équipements de mesure, notamment de la qualité des signaux audiovisuels.

L'invention consiste à décoder le flux de données, par exemple MPEG2-TS, pour en extraire une information de marquage temporel "time stamp" (par exemple 3 octets tous les 40ms) pour piloter des équipements de métrologie de qualité, par exemple audio et vidéo, en télévision numérique.

Dans le cas du standard MPEG-2, on utilise avantageusement le champ P.C.R. (ou bien SCR) contenu dans le flux MPEG2-TS ainsi que le signal vidéo analogique pour obtenir une indication temporelle nécessaire au pilotage d'équipements de mesure de qualité de signaux audio et vidéo.

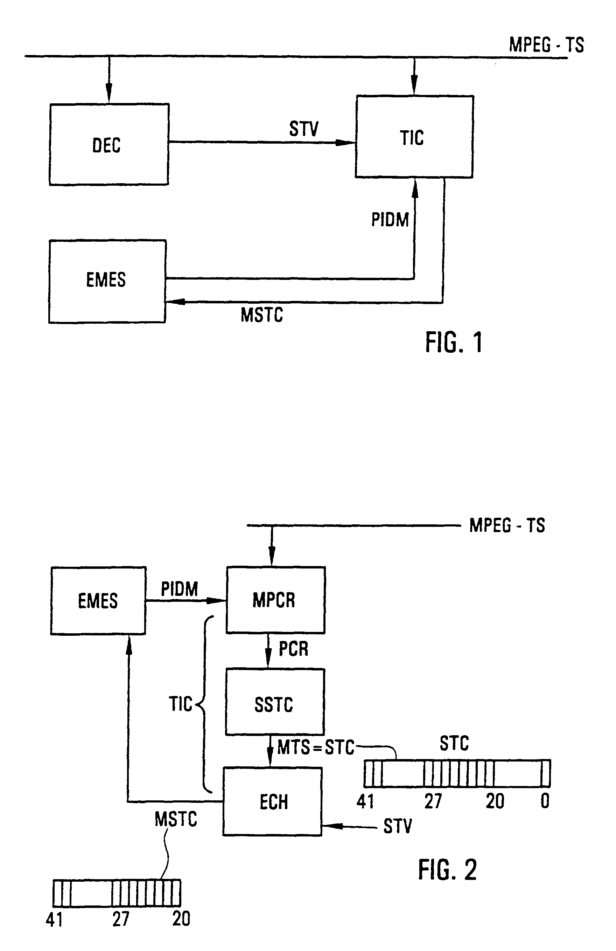

L'équipement désigné par le nom générique TIC s'insère comme représenté à la figure 1 dans un réseau de télévision numérique.

L'équipement TIC reçoit le flux de transport multiprogrammes MPEG-TS, ainsi qu'éventuellement un signal PIDM représentant l'indicatif PID des trames à sélectionner, le signal PIDM étant généré par l'équipement de mesure EMES. Un décodeur DEC qui reçoit le flux MPEG-TS produit un signal analogique de synchronisation de trame STV qui est introduit à une entrée de l'équipement TIC, qui génère en sortie un signal MSTC de déclenchement des mesures, qui est fourni à une entrée de l'équipement de mesure EMES.

L'équipement de mesure EMES comporte en particulier un analyseur audio et vidéo qui traite les signaux audiovisuels en bande de base et effectue des mesures de qualité sur ces dits signaux. Le procédé selon l'invention permet de maîtriser l'instant auquel débutent les mesures, grâce au signal MSTC, qui constitue un "top" de début des mesures de qualité à effectuer.

L'équipement TIC réalise les fonctions suivantes : le décodage de l'horloge PCR, la génération de l'horloge système et la synchronisation par le signal vidéo analogique STV pour l'échantillonnage de cette horloge.

Le flux MPEG2-TS dispose d'informations temporelles sur l'estampillage des données numériques. Le champ PCR contenu dans les trames MPEG2-TS permet en particulier de réaliser le marquage temporel des données. A partir du PCR le STC est généré. C'est un compteur de marquage temporel des données, qui présente un compteur de 42 bits représentant une horloge à 27 Mhz. L'équipement TIC décode le flux MPEG2-TS et pilote l'équipement de mesure à l'aide de ce compteur d'horodatage.

Selon un mode de réalisation de l'invention, on décode le flux MPEG2-TS pour en extraire le PCR et synthétiser un signal MTS dont le compte est déduit de manière univoque, par exemple du signal STC et est par exemple égal à celui du signal STC. Cette donnée permet de créer une information appelée MSTC (3 octets tous les 40ms). Cette opération permet de piloter des équipements de métrologie de qualité AUDIO et/ou VIDEO, en déclenchant les traitements et effectuant l'indexation à l'aide du signal MSTC des paramètres de qualité mesurés.

La trame MPEG2-TS comporte plusieurs types d'information. Une trame MPEG2-TS comprend 188 octets dans lesquels existent plusieurs champs particuliers qui permettent à un décodeur MPEG2 de retrouver les informations utiles.

Afin d'identifier un programme donné, le champ PID ("Packet Identifier") est disponible sur 13 bits.

Le dispositif peut intégrer un module d'identification d'un PID spécifique, de préférence celui des données vidéo associées au programme pour lequel sont effectuées des mesures de qualité audio et vidéo.

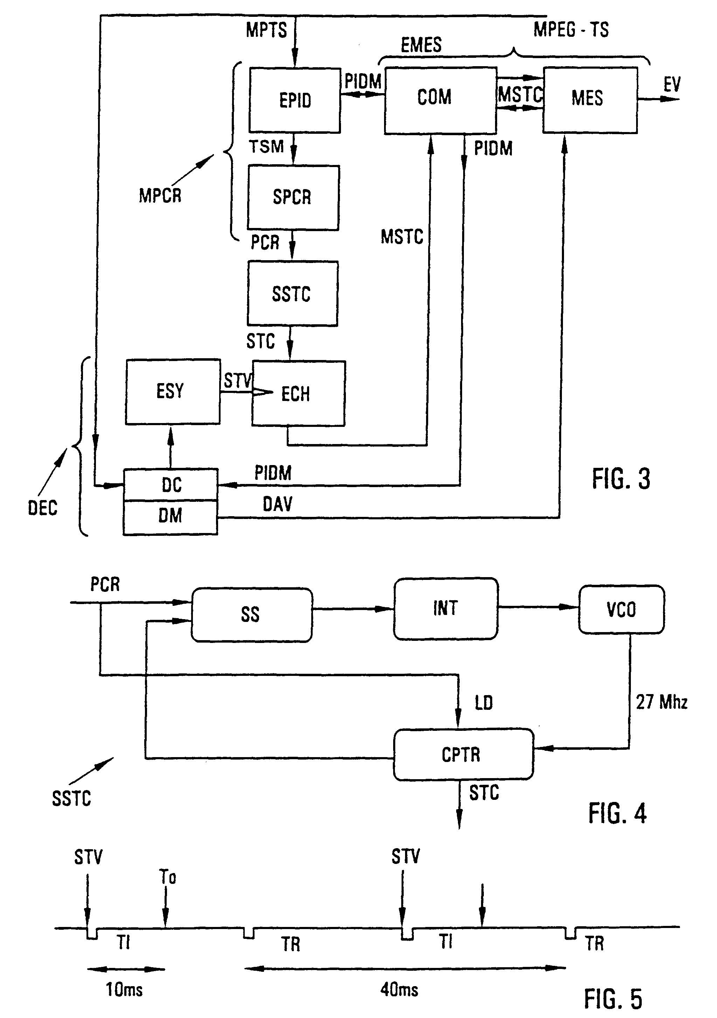

Comme représenté à la figure 2, l'équipement TIC comporte trois modules fonctionnels.
- Un extracteur MPCR qui permet de récupérer dans le flux MPEG-TS les trames de 188 octets associés au PIDM requis par l'équipement de mesure EMES, et de générer le champ PCR (ou SCR) à partir des trames ainsi récupérées
- Un module SSTC qui génère le signal STC sur 42 bits à partir du signal PCR, comme décrit plus loin en référence à la figure 4
- Un échantillonneur ECH qui reçoit le signal STV fourni par le décodeur DEC et qui échantillonne au moins des bits significatifs du signal STC à chaque occurrence du signal STV pour générer le signal MSTC. De préférence, on ne conserve du signal STC que les bits significatifs utiles, par exemple les bits b₂₀ à b₄₁.

Le champ PCR occupe 42 bits à l'intérieur des trames (33 bits de base, 6 bits de réservé, 9 bits d'extension). L'extracteur MPCR du signal PCR teste dans un premier lieu le drapeau de présence de PCR dans chaque trame considérée et en extrait l'information sur 42 bits. Cette information représente un rafraîchissement de l'horloge numérique interne aux codeurs et décodeurs et qui est cadencée à la fréquence de 27 Mhz. L'information PCR n'est pas régulière dans le flux de données. En effet, la norme MPEG2 impose que le temps séparant deux trames contenant une information PCR ne soit pas supérieure à 100ms, mais ceci ne présente pas d'inconvénient particulier étant donné que ce signal sert seulement à effectuer un calage de phase du signal STC.

Comme représenté à la figure 3, le module MPCR comporte un sous-module EPID qui démodule le flux MPEG-TS et génère en sortie les trames TSM sélectionnées en fonction du PIDM. A ces trames, le sous-module SPCR applique un filtre qui détecte les drapeaux indiquant la présence du signal PCR qui est restitué en sortie du sous-module SPCR. Le décodeur DEC comporte un sous-module DC assurant la fonction de décodage proprement dit et un sous-module ESY qui génère le signal analogique STV. Le sous-module décodeur DC reçoit également le signal PIDM pour sélectionner les trames sur lesquelles la mesure doit être effectuée dans le cas préféré où celles-ci sont identiques à celles qui sont sélectionnées pour la restitution du signal STC. L'équipement de mesure comporte un sous-module de communication COM et un sous-module de mesure MES. Le sous-module COM fournit le signal PIDM aux sous-modules EPID et DC, il reçoit le signal MSTC et il le transmet aux sous-modules de mesure MES. A partir des trames sélectionnées sur la base du signal PIDM, le sous-module DM du décodeur fournit les données audio-vidéo DAV en bande de base au sous-module de mesure MES qui produit en sortie des signaux d'évaluation EV qui identifient l'équipement de mesure particulier et qui sont étiquetés à l'aide du signal MSTC.

Pour piloter les équipements de mesure de qualité audio et vidéo, on génère un signal d'horloge STC stable à 27 Mhz. Pour synthétiser le STC cadencé par l'horloge à 27 Mhz comptatible avec la norme MPEG2, le module représenté à la figure 4 permet à partir des valeurs de PCR et d'une boucle d'asservissement (VCO) de la phase d'une horloge à la fréquence de 27 Mhz, de générer le signal STC. Le principe de la fonction de synthèse du STC repose sur l'asservissement par une boucle à verrouillage de phase à 27 Mhz à partir des valeurs de PCR pour disposer en sortie des valeurs du STC au rythme de 27 Mhz.

A cet effet, et comme représenté à la figure 4, le signal PCR généré en sortie du sous-module SPCR est appliqué à une entrée d'un soustracteur SS dont la sortie attaque un intégrateur INT dont la sortie attaque à son tour l'entrée de commande de phase d'une horloge à 27 Mhz verrouillée en phase. La sortie de cette horloge VCO incrémente un compteur CPTR. Le signal PCR est appliqué à l'entrée de chargement LD du compteur CPTR. A chaque occurrence du signal PCR, la valeur du compteur CPTR après chargement est comparée à la valeur de PCR dans le soustracteur SS et le résultat de cette comparaison présent en sortie du soustracteur SS permet ledit asservissement en phase.

Le flux des valeurs du STC est trop important par rapport à la fréquence de mesure des analyseurs de qualité audio et vidéo. On met en oeuvre des marques temporelles référencées par rapport à la fréquence vidéo (synchronisation image). Puisque 40ms séparent deux images de vidéo analogique, un exemple de la fréquence de mesure des analyseurs audio et vidéo a été choisi, à savoir une cadence de 40ms ou d'un multiple de 40ms, pour le standard européen.

L'extracteur ESY de synchronisation vidéo délivre dans le cas d'espèce un "top" tous les 40ms. A partir de ce "top", l'échantillonneur extrait les valeurs de STC. Le temps entre deux mesures de qualité audio et vidéo est 40ms ou un multiple de 40ms. La synchronisation par rapport au signal vidéo analogique permet d'échantillonner ce compteur. Elle permet également de fournir aux équipements de mesure une valeur du compteur tous les 40ms.

La cadence de variation des bits de poids faible est trop importante par rapport à 40ms. En effet, ce bit b₀ de poids le plus faible change toutes les 37ns, le bit suivant b₁ change toutes les 74ns et ainsi de suite. Par conséquent, les bits de poids faible de ce compteur deviennent inutiles. Il est donc suffisant de conserver dans le signal MTSC les bits B20 (qui change toutes les 23ms) à B41 (qui change toutes les 13h 15min) pour indiquer à l'équipement de mesure le début des mesures à effectuer.

Du côté des bits de poids faible, il suffit de conserver jusqu'au premier bit qui varie plus vite que la périodicité des mesures. Du côté des bits de poids fort, il suffit de conserver un nombre de bits suffisant pour discriminer entre elles deux séries de mesure en tenant compte du temps T de propagation et de collectionnement des données de mesure. Par exemple, pour T = 3 s, on peut considérer qu'il suffit de conserver comme bit de poids fort le bit b₂₈ qui varie toutes les 5,8 secondes. L'étiquetage s'effectue par exemple en conservant les bits b₂₅ à b₂₈.

La figure 5 montre les signaux STV présents au début de chaque trame impaire TI. La durée d'une paire de trames paire TP et impaire TI est de 40ms. On a également représenté un signal TO espacé de 10ms par rapport à STV.

Le signal MSTC sert à piloter les équipements de mesure de la qualité des signaux audio et/ou vidéo d'autres appareils de métrologie de signaux MPEG2, en indiquant l'instant du début des mesures pour déclencher le processus de mesure et éventuellement en permettant d'étiqueter les mesures avec la valeur de MSTC de sorte que l'on puisse ensuite comparer des mesures effectuées sur une même séquence en divers points du réseau.

## Revendications

1. Procédé de pilotage d'un équipement de métrologie de la qualité de signaux de télévision numérique comportant un flux de données organisées selon des trames, **caractérisé en ce qu**'il comporte les étapes suivantes :
a) sélectionner dans le flux de données un signal temporel de référence (PCR) ;
b) générer à partir du signal temporel de référence (PCR) un signal d'horloge numérique multibits (MTS) dont la phase est asservie à partir dudit signal temporel de référence (PCR) et dont le compte est déduit de manière univoque de celui d'une base temporelle (STC) générée lors de l'encodage initial des signaux de télévision numérique ;
c) transmettre au moins des bits significatifs du signal d'horloge numérique (MTS) à l'équipement de mesure en synchronisme avec un signal analogique (STV) de synchronisation de trame vidéo, décodé à partir du flux de données pour générer un signal (MSTC) de déclenchement des mesures.

2. Procédé selon la revendication 1, **caractérisé en ce que** l'étape a comporte les sous-étapes suivantes :
a₁) sélectionner les trames correspondant à des données vidéo associées à un programme ;
a₂) sélectionner dans les dites trames ledit signal temporel de référence.

3. Procédé selon la revendication 2, **caractérisé en ce que** les signaux de télévision numériques sont selon le standard MPEG-2 et en ce que, lors de l'étape a₁, la sélection des trames s'effectue à partir du champ PID.

4. Procédé selon une des revendications 2 ou 3, **caractérisé en ce que** les données vidéo sont celles pour lesquelles sont effectuées des mesures de qualité audio et/ou vidéo.

5. Procédé selon les revendications 3 et 4, **caractérisé en ce qu**'il comporte une étape de décodage des données vidéo à partir de trames sélectionnées à partir dudit champ PID.

6. Procédé selon une des revendications précédentes, **caractérisé en ce que** le compte du signal d'horloge multibits (MTS) est égal à celui de la base temporelle (STC).

7. Procédé selon une des revendications précédentes, **caractérisé en ce que** ladite sélection du signal temporel de référence s'effectue en testant un drapeau de présence dudit signal temporel de référence dans chaque trame considérée.

8. Procédé selon une des revendications précédentes, **caractérisé en ce que** les signaux de télévision numérique sont selon le standard MPEG-2 et en ce que le signal temporel de référence est le signal PCR ou le signal SCR.

9. Procédé selon la revendication 8, **caractérisé en ce que**, lors de l'étape b, ledit signal d'horloge numérique présente une fréquence de k x 27MHz, k étant un nombre entier ou fractionnaire non nul.

10. Equipement de métrologie de la qualité de signaux de télévision numérique comportant un flux de données organisées selon des trames, **caractérisé en ce qu**'il comporte :
- un dispositif d'identification (MPCR) recevant à une entrée le flux de données et produisant en sortie un signal temporel de référence (PCR) sélectionné dans le flux de données ;
- un générateur d'horloge (SSTC) dont la phase est asservie à partir dudit signal temporel de référence (PCR) et produisant en sortie un signal d'horloge multibits (MTS) cadencé à une fréquence donnée et dont le compte est déduit de manière univoque de celui d'une base temporelle (STC) générée lors de l'encodage initial des signaux vidéo numériques ;
- un dispositif d'échantillonnage (ECH) recevant à une première entrée au moins des bits significatifs dudit signal d'horloge multibits (MTS) et à une deuxième entrée un signal analogique de synchronisation de trame vidéo (STV) présent en sortie d'un décodeur (DEC) du flux de données, et produisant en sortie à chaque occurrence dudit signal analogique de synchronisation de trame video (STV) un signal représentant la valeur actualisée au moins de bits significatifs du signal d'horloge multibits (MTS) ;
- un dispositif de mesure (EMES) recevant en entrée ledit signal de valeur actualisée et générant en conséquence un signal (MSTC) de déclenchement des mesures.

11. Equipement selon la revendication 10, **caractérisé en ce que** le dispositif d'identification présente une entrée de sélection recevant un signal d'identification de trames correspondant à des données vidéo associées à un programme, et en ce qu'il est agencé pour sélectionner dans les dites trames ledit signal temporel de référence.

12. Equipement selon une des revendications 10 ou 11, **caractérisé en ce que** le compte du signal d'horloge numérique multibits (MTS) est égal à celui de ladite base temporelle (STC).

## Patentansprüche

1. Verfahren zur Steuerung einer Ausrüstung für die Messung der Qualität von digitalen Fernsehsignalen, die einen Fluss von Daten enthalten, welcher gemäß Rastern bzw. Teilbildern organisiert ist, **dadurch gekennzeichnet**, dass es die folgenden Schritte enthält:
a) Auswählen eines zeitlichen Bezugssignals (PCR) in dem Fluss der Daten;
b) Erzeugen, ausgehend von dem zeitlichen Bezugssignal (PCR), ein digitales Mehrbittaktsignal (MTS), dessen Phase ausgehend von dem zeitlichen Bezugssignal (PCR) gesteuert bzw. geregelt wird und dessen Impulszahl in eindeutiger Weise von jener einer zeitlichen Basis (STC) abgeleitet wird, die während der anfänglichen Kodierung der digitalen Fernsehsignale erzeugt wird;
c) Übertragen wenigstens der kennzeichnenden bzw. signifikanten Bits des digitalen Taktsignals (MTS) zu der Ausrüstung für die Messung in Synchronisation mit einem, ausgehend von dem Fluss der Daten dekodierten, Analogsignal (STV) der Synchronisation des Videorasters bzw. -teilbilds zum Erzeugen eines Signals (MSTC) für die Auslösung von Messungen dekodiert wird.

2. Verfahren gemäß Anspruch 1, **dadurch gekennzeichnet,** dass der Schritt a) die folgenden Unterschritte enthält:
al) Auswählen der Raster bzw. Teilbilder, die Videodaten entsprechen, welche einem Programm zugeordnet sind;
a2) Auswählen des genannten zeitlichen Bezugssignals unter bzw. in den genannten Rastern bzw. Teilbildern.

3. Verfahren gemäß Anspruch 2, **dadurch gekennzeichnet,** dass die digitalen Fernsehsignale gemäß dem Standard MPEG-2 sind und dass während des Schritts al die Auswahl der Raster bzw. Teilbilder ausgehend von dem Feld bzw. Raster PID geschieht.

4. Verfahren gemäß einem der Ansprüche 2 oder 3, **dadurch gekennzeichnet**, dass die Videodaten jene sind, für welche Messungen der Audio- und/oder Videoqualität bewirkt werden.

5. Verfahren gemäß den Ansprüchen 3 und 4, **dadurch gekennzeichnet,** dass es einen Schritt der Dekodierung der Videodaten von Rastern bzw. Teilbildern, die von dem genannten Feld bzw. Raster PID ausgewählt sind, enthält.

6. Verfahren gemäß einem der vorhergehenden Ansprüche, **dadurch gekennzeichnet**, dass die Impulszahl des Mehrbittaktsignals (MTS) gleich jener der zeitlichen Basis (STC) ist.

7. Verfahren gemäß einem der vorhergehenden Ansprüche, **dadurch gekennzeichnet**, dass die genannte Auswahl des zeitlichen Bezugssignals geschieht, indem man ein Kennzeichen bzw. eine Marke des Vorhandenseins des genannten zeitlichen Bezugssignals in jedem betrachteten Raster bzw. Teilbild testet bzw. prüft.

8. Verfahren gemäß einem der vorhergehenden Ansprüche, **dadurch gekennzeichnet**, dass die digitalen Fernsehsignale gemäß dem Standard MPEG-2 sind, und dass das zeitliche Bezugssignal das Signal PCR oder das Signal SCR ist.

9. Verfahren gemäß Anspruch 8, **dadurch gekennzeichnet,** dass während des Schritts b das genannte digitale Taktsignal eine Frequenz von k x 27 MHz aufweist, wobei k eine ganze Zahl oder eine Bruchzahl ungleich Null ist.

10. Ausrüstung für die Messung der Qualität von digitalen Fernsehsignalen, welche einen Fluss von Daten umfassen, die gemäß Rastern bzw. Teilbildern organisiert sind, **dadurch gekennzeichnet**, dass sie folgendes umfasst:
- eine Identifizierungseinrichtung (MPCR), welche an einem Eingang den Fluss von Daten empfängt und am Ausgang ein zeitliches Bezugssignal (PCR) erzeugt, das in dem Fluss von Daten ausgewählt ist;
- einen Taktgenerator (SSTC), dessen Phase ausgehend von dem genannten zeitlichen Bezugssignal (PCR) gesteuert bzw. geregelt ist und der am Ausgang ein Mehrbittaktsignal (MTS) erzeugt, das mit einer gegebenen Frequenz getaktet ist und dessen Impulszahl in eindeutiger Weise von jener einer zeitlichen Basis (STC) abgeleitet ist, die während der anfänglichen Kodierung der digitalen Videosignale erzeugt worden ist;
- eine Probenahmeeinrichtung (ECH), die an einem ersten Eingang wenigstens die kennzeichnenden bzw. signifikativen Bits des genannten Mehrbittaktsignals (MTS) und an einem zweiten Eingang ein Analogsignal der Synchronisation des Videorasters bzw. -teilbilds (STV), das am Ausgang eines Dekodierers (DEC) des Flusses der Daten vorhanden ist, empfängt, und am Ausgang bei jedem Auftreten des genannten Analogsignals der Synchronisation des Videorasters bzw. -teilbilds (STV) ein Signal erzeugt, welches den aktualisierten Wert wenigstens der kennzeichnenden bzw. signifikanten Bits des Mehrbittaktsignals (MTS) repräsentiert;
- eine Messeinrichtung (EMES), welche am Eingang das genannte Signal des aktualisierten Werts empfängt und demzufolge ein Signal (MSTC) der Auslösung von Messungen erzeugt.

11. Ausrüstung gemäß Anspruch 10, **dadurch gekennzeichnet,** dass die Einrichtung für die Identifikation einen Wahleingang aufweist, der ein Signal der Identifikation von Rastern bzw. Teilbildern entsprechend Videodaten, die einem Programm zugeordnet sind, empfängt, und dass sie zum Auswählen des genannten zeitlichen Bezugssignals unter bzw. in den genannten Rastern bzw. Teilbildern eingerichtet ist.

12. Ausrüstung gemäß einem der Ansprüche 10 oder 11, **dadurch gekennzeichnet**, dass die Impulszahl des digitalen Mehrbittaktsignals (MTS) gleich jener der genannten zeitlichen Basis (STC) ist.

## Claims

1. A method of controlling equipment for monitoring the quality of digital television signals comprising a data stream organized into frames, the method being **characterized in that** it comprises the following steps:
a) selecting a reference time signal (PCR) in the data stream;
b) on the basis of the reference time signal (PCR), generating a multibit digital clock signal (MTS) whose phase is servo-controlled from said reference time signal (PCR) and whose count is deduced unambiguously from the count of a time base (STC) generated during initial encoding of the digital television signals; and
c) transmitting at least meaningful bits of the digital clock signal (MTS) to the measurement equipment synchronously with an analog video frame synchronizing signal (STV) as decoded from the data stream so as to generate a measurement triggering signal (MSTC).

2. A method according to claim 1, **characterized in that** step a) comprises the following sub-steps:
a₁) selecting the frames which correspond to video data associated with a program; and
a₂) selecting said reference time signal from said frames.

3. A method according to claim 2, **characterized in that** the digital television signals are in the MPEG-2 standard and in that during step a₁), frames are selected on the basis of the PID field.

4. A method according to claim 2 or 3, **characterized in that** the video data is that on which audio and/or video quality measurements are performed.

5. A method according to claims 3 and 4, **characterized in that** it includes a step of decoding the video data from the frames selected on the basis of said PID field.

6. A method according to any preceding claim, **characterized in that** the count of the multibit clock signal (MTS) is equal to the count of the time base (STC).

7. A method according to any preceding claim, **characterized in that** said selection of the reference time signal is performed by testing a flag indicating the presence of said reference time signal in each frame under consideration.

8. A method according to any preceding claim, **characterized in that** the digital television signals are in the MPEG-2 standard and in that the reference time signal is the signal PCR or the signal SCR.

9. A method according to claim 8, **characterized in that** during step b), said digital clock signal is at a frequency of k x 27 MHz, where k is a non-zero integer or fraction.

10. Equipment for measuring the quality of digital television signals comprising a data stream organized in frames, the equipment being **characterized in that** it comprises:
· an identifier device (MPCR) receiving the data stream as input and outputting a reference time signal (PCR) selected from said data stream;
· a clock generator (SSTC) whose phase is locked on the basis of said reference time signal (PCR) and outputting a multibit clock signal (MTS) operating at a given frequency and whose count is deduced unambiguously from the count of a time base (STC) generated during the initial encoding of the digital video signals;
· a sampler (ECH) receiving on a first input at least meaningful bits of said multibit clock signal (MTS) and on a second input an analog video frame synchronizing signal (STV) present at the output from a data stream decoder (DEC), and outputting on each occurrence of said analog video frame synchronizing signal (STV) a signal representing the updated value at least of the meaningful bits of the multibit clock signal (MTS); and
· a measurement device (EMES) receiving as input said updated value signal and generating as a consequence a signal (MSTC) for triggering measurements.

11. Equipment according to claim 10, **characterized in that** the identifier device has a selection input receiving a frame identifier signal corresponding to video data associated with a program, and in that it is organized to select said reference time signal from said frames.

12. Equipment according to claim 10 or 11, **characterized in that** the count of the multibit digital clock signal (MTS) is equal to the count of said time base (STC).
